# EUROPÄISCHE PATENTSCHRIFT

(11) **EP 1 062 111 B1**
(45) Veröffentlichungstag und Bekanntmachung des Hinweises auf die Patenterteilung: **15.12.2004**
(21) Anmeldenummer: 99915647.4
(22) Anmeldetag: 17.03.1999
(51) Int. Cl.: B60K 13/04, F01N 7/18, F16L 55/033

(54) **AUFHÄNGEÖSE FÜR EINE SCHWINGENDE LAST, INSBESONDERE FÜR EINE ABGASANLAGE EINES KRAFTFAHRZEUGS**
SUSPENSION LUG FOR A SWINGING LOAD, ESPECIALLY AN EXHAUST SYSTEM OF A MOTOR VEHICLE
BOUCLE DE SUSPENSION POUR CHARGE OSCILLANTE, EN PARTICULIER POUR LE SYSTEME D'ECHAPPEMENT D'UN VEHICULE AUTOMOBILE

(30) Priorität: 20.03.1998 DE 19812347
(43) Veröffentlichungstag der Anmeldung: 27.12.2000
(73) Patentinhaber: SGF SÜDDEUTSCHE GELENKSCHEIBENFABRIK GMBH & CO. KG., 84478 Waldkraiburg (DE)
(72) Erfinder: STEINMAIER, Klaus, D-84478 Waldkraiburg (DE)
(74) Vertreter: Goetz, Rupert, Dipl.-Ing.
(86) Internationale Anmeldenummer: PCT/EP1999/001772
(87) Internationale Veröffentlichungsnummer: WO 1999/048717

(56) Entgegenhaltungen:
- EP-A- 0 710 769
- DE-A- 2 658 358
- DE-A- 3 737 987
- DE-A- 4 139 381

## Beschreibung

Die Erfindung betrifft eine Aufhängeöse für eine Abgasanlage eines Kraftfahrzeugs, mit einem ringförmigen Elastomerkörper, der von einer Außenwand und einer Innenwand begrenzt ist und zwei einander diametral gegenüberliegende Aufhängepole sowie zwei Äquatorialzonen aufweist, in einer Anordnung, bei der die Aufhängepole sich bei Zugbelastung der Aufhängeöse voneinander entfernen, während die Äquatorialzonen sich einander nähern,
und mit einer biegsamen Einlage, die in den Elastomerkörper so eingebettet ist, daß sie bei Zugbelastung der Aufhängeöse Zugkräfte über die Äquatorialzonen von einem Aufhängepol zum anderen überträgt.

Bei einer bekannten Aufhängeöse dieser Gattung (DE 37 37 987 C2) hat der Elastomerkörper eine in Vorderansicht rhombusförmige Außenwand, und die biegsame Einlage ist entsprechend rhombusförmig, so daß sie überall im wesentlichen den gleichen Abstand von der Außenwand des Elastomerkörpers hat. Die Innenwand des Elastomerkörpers hat im Bereich der beiden Aufhängepole sowie in den beiden Äquatorialzonen einen besonders großen Abstand von der Einlage; ungefähr in der Mitte zwischen jedem der Aufhängepole und den beiden Äquatorialzonen hat der Abstand zwischen Innenwand und Einlage ein Minimum. Wenn diese bekannte Aufhängeöse in der vorgesehenen Weise auf Zug belastet wird, ihre beiden Aufhängepole sich also voneinander entfernen, entstehen im Elastomerkörper außerhalb der Einlage im Bereich der beiden Aufhängepole Zugspannungen, in den beiden Äquatorialzonen hingegen Druckspannungen. Innerhalb der Einlage entstehen im Elastomerkörper in den Bereichen der beiden Aufhängepole Druckspannungen, in den Äquatorialzonen hingegen Zugspannungen. Die biegsame Einlage besteht aus elastisch dehnfähigem Material, so daß sie und der Elastomerkörper Federwege ähnlicher Größenordnung aufweisen. Dadurch soll die bekannte Aufhängeöse eine Kennlinie erhalten, die besonders gut an kleine Auslenkungen einerseits und große Auslenkungen andererseits angepaßt ist. Dabei ist aber der Anteil an der gesamten Zugbelastung, der durch Zugspannungen in den beiden Äquatorialzonen des Elastomerkörpers übertragen werden muß, so erheblich, daß einer Aufhängeöse gegebener Größe nur eine verhältnismäßig geringe Zugbelastung im Dauerbetrieb zugemutet werden kann.

Eine andere bekannte Aufhängeöse (DE 26 58 358 B2) hat eine praktisch nicht dehnbare Einlage aus Federstahlband, die von der auch bei dieser Aufhängeöse rhombusförmigen Außenwand des Elastomerkörpers einerseits und von mehreren innerhalb des von der Einlage umgrenzten Bereichs des Elastomerkörpers freigelassenen Aussparungen andererseits einen im wesentlichen konstanten Abstand hat.

Es hat sich gezeigt, daß diese bekannten Aufhängeösen eine nicht in jedem Fall befriedigende Lebensdauer haben. Der Erfindung liegt deshalb die Aufgabe zugrunde, eine Aufhängeöse der eingangs genannten Gattung besonders hinsichtlich ihrer Lebensdauer zu verbessern.

Die Aufgabe ist erfindungsgemäß dadurch gelöst, daß die Einlage einen auf dem Weg von den Aufhängepolen zu den Äquatorialzonen stetig abnehmenden Abstand von der Innenwand des Elastomerkörpers hat.

Vorteilhafte Weiterbildungen ergeben sich aus den Unteransprüchen.

Erfindungsgemäß ist in den Äquatorialzonen innerhalb des von der biegsamen Einlage umgrenzten Bereichs nur so viel Elastomer angeordnet, wie zum Schutz der Einlage erforderlich ist. Infolgedessen treten in den Äquatorialzonen des Elastomerkörpers bei Zugbelastung der Aufhängeöse nur vernachlässigbar geringe Zugspannungen auf. Im Bereich der Aufhängepole der erfindungsgemäßen Aufhängeöse hat die biegsame Einlage hingegen einen verhältnismäßig geringen Abstand von der Außenwand; hier ist die von der Einlage nach außen gemessene Dicke des Elastomerkörpers vorzugsweise nur gerade so groß, wie zum Schutz der Einlage erforderlich. Der erfindungsgemäß von den Aufhängepolen zu den Äquatorialzonen hin stetig abnehmende Abstand der Einlage von der Innenwand des Elastomerkörpers hat die Folge, daß im Elastomerkörper bei Zugbelastung der Aufhängeöse nirgends schädliche Zugspannungen auftreten. Der Elastomerkörper wird also im wesentlichen auf Druck und in bestimmten Bereichen auf Schub belastet. Für Druck- und Schubspannungen sind Elastomerkörper bekanntermaßen, auch und gerade im Dauerbetrieb, erheblich weniger empfindlich als für Zugspannungen. Dies hat zur Folge, daß eine erfindungsgemäße Aufhängeöse, die mit bestimmten Zugkräften belastet werden soll, ohne Verlust an Lebensdauer mit weniger Aufwand an Elastomer, und somit kostensparend und erheblich kleiner gestaltet werden kann als bekannte gattungsgemäße Aufhängeösen. Erfindungsgemäße Aufhängeösen setzen sich im Laufe ihrer Lebensdauer geringer und haben eine konstantere Kraft-Weg-Kennlinie als bekannte gattungsgemäße Aufhängeösen. Wegen der geringen Zugspannungen können für erfindungsgemäße Aufhängeösen Elastermere mit geringer Ein- und Weiterreißfestigkeit verwendet werden, beispielsweise Silikonkautschuke. Diese können wegen ihrer hohen Temperaturbeständigkeit für Aufhängeösen verwendet werden, die bei hoher Umgegebungstemperatur mit Zugkräften belastet werden.

Bei einer bevorzugten Ausführungsform der erfindungsgemäßen Aufhängeöse ist - im Gegensatz zu der aus DE 37 37 987 C2 bekannten, jedoch übereinstimmend mit der aus DE 26 58 358 B2 bekannten Aufhängeöse - die biegsame Einlage im wesentlichen undehnbar; die Einlage hat also einen sehr viel höheren Elastizitätsmodul als der Elastomerkörper.

Ausführungsbeispiele der Erfindung werden im folgenden anhand schematischer Zeichnungen mit weiteren Einzelheiten erläutert. Es zeigen:
- Fig. 1: eine erste erfindungsgemäße Aufhängeöse, unbelastet, in Seitenansicht,
- Fig. 2: den waagerechten Schnitt II-II in Fig.1,
- Fig. 2A: einen stark vergrößerten Ausschnitt aus Fig.2,
- Fig. 3: den senkrechten Schnitt III-III in Fig.1,
- Fig. 3A: einen stark vergrößerten Ausschnitt aus Fig.3,
- Fig. 4: eine zweite erfindungsgemäße Aufhängeöse, unbelastet, in Seitenansicht,
- Fig. 5: den waagerechten Schnitt V-V in Fig.4,
- Fig. 6: den senkrechten Schnitt VI-VI in Fig.4,
- Fig. 7: eine dritte erfindungsgemäße Aufhängeöse, unbelastet, in Seitenansicht,
- Fig. 8: den waagerechten Schnitt VIII-VIII in Fig.7,
- Fig. 9: den senkrechten Schnitt IX-IX in Fig.7,
- Fig.10: die in Fig.7 dargestellte Aufhängeöse, in Seitenansicht, jedoch in belastetem Zustand,
- Fig.11: den waagerechten Schnitt XI-XI in Fig.10,
- Fig.12: den senkrechten Schnitt XII-XII in Fig.10,
- Fig.13: eine vierte erfindungsgemäße Aufhängeöse, unbelastet, in Seitenansicht,
- Fig.14: den waagerechten Schnitt XIV-XIV in Fig.13,
- Fig.14A: einen stark vergrößerten Ausschnitt aus Fig.14,
- Fig.15: den senkrechten Schnitt XV-XV in Fig.13 und
- Fig.15A: einen stark vergrößerten Ausschnitt aus Fig.15.

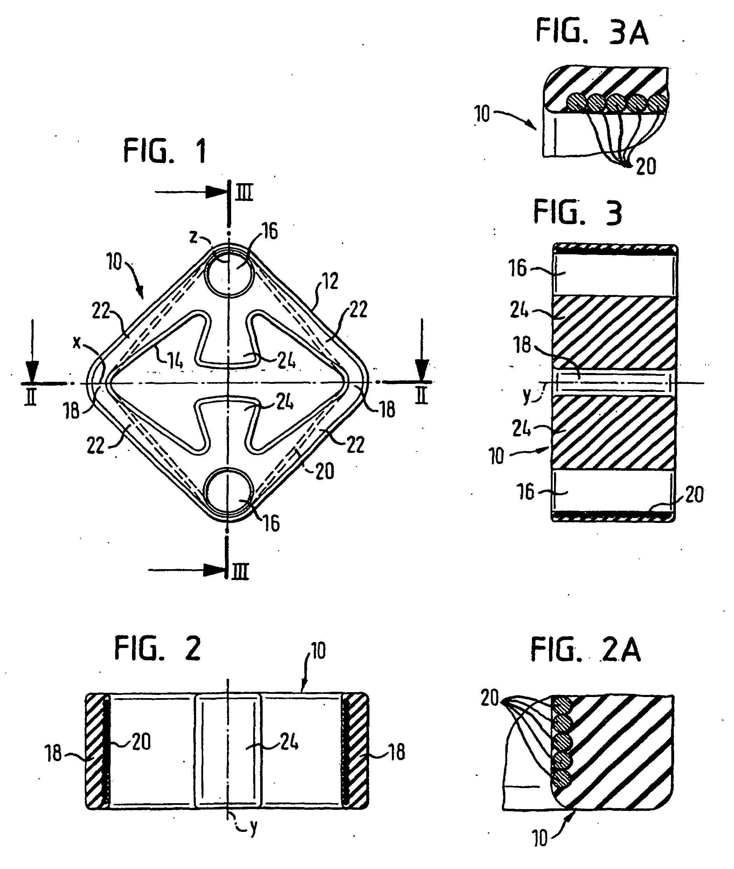

Die in Fig. 1 bis 3A dargestellte Aufhängeöse hat einen Elastomerkörper 10 mit einer Außenwand 12, die in unbelastetem Zustand der Aufhängeöse in Seitenansicht gemäß Fig. 1 die Form eines Quadrats mit abgerundeten Ecken aufweist, und mit einer Innenwand 14, die eine einheitliche Aussparung umgrenzt, welche gemäß Fig. 1 die Form eines waagerechten Doppelpfeils aufweist. Der Elastomerkörper 10 hat gemäß Fig. 2 und 3 eine Dicke, die ungefähr der Hälfte seiner Seitenlänge entspricht. Im Bereich seiner oberen und unteren Ecken hat der Elastomerkörper 10 je einen Aufhängepol 16, der in allen dargestellten Beispielen von einem zylindrischen Loch gebildet ist, in das sich ein entsprechender Zapfen einsetzen läßt, beispielsweise in den oberen Aufhängepol ein an der Bodenplatte eines Kraftfahrzeuges befestigter Zapfen, und in den unteren Aufhängepol ein an einem Auspufftopf befestigter Zapfen. Die beiden Aufhängepole 16 können aber auch mit je einer in den Elastomerkörper 10 eingebetteten, insbesondere einvulkanisierten, Buchse aus Stahl oder aus einem wärmeisolierenden harten Werksstoff ausgekleidet sein.

Der Elastomerkörper 10 ist in bezug auf eine waagerechte X-Y-Ebene sowie in bezug auf eine senkrechte Y-Z-Ebene symmetrisch gestaltet. In der X-Y-Ebene weist der Elastomerkörper 10 zwei Äquatorialzonen 18 auf, die einander in ungefähr gleichem Abstand diametral gegenüberliegend angeordnet sind wie die beiden Aufhängepole 16.

In den Elastomerkörper 10 ist eine biegsame, jedoch nicht nennenswert dehnbare Einlage 20 eingebettet, die sich um die beiden Aufhängepole 16 herum und durch die Äquatorialzonen. 18 erstreckt und im dargestellten Beispiel von einer Wicklung aus Faden oder Draht gebildet ist, die nahezu über die gesamte, in Y-Richtung gemessene Breite des Elastomerkörpers gleichmäßig verteilt ist. Die Einlage 20 kann aber auch aus flächigem Material, z.B. Bändern, Folien oder Geweben bestehen. Ferner kann die Einlage 20 einen Faden oder - vorzugsweise - mehrere sich kreuzende Fäden aufweisen, die sich zwischen den Aufhängepolen 16 diagonal über die Breite des Elastomerkörpers erstrecken.

Im Bereich der beiden Aufhängepole 16 hat die Einlage 20 nur einen minimalen Abstand von der Außenwand 12 des Elastomerkörpers 10; dieser Abstand ist so gewählt, daß die Einlage nur abgedeckt ist , um hinreichend geschützt zu sein. Falls die Einlage 20 aus gegenüber Umgebungseinflüssen unempfindlichem Material besteht, kann sie im Bereich oberhalb des oberen Aufhängepols 16 und unterhalb des unteren Aufhängepols 16 auch freiliegen. Von den Aufhängepolen 16 aus zu den Äquatorialzonen 18 hin nimmt der Abstand der Einlage 20 von der Außenwand 12 des Elastomerkörpers 10 stetig zu; gleichzeitig nimmt ihr Abstand von der Innenwand 14 stetig ab. In den Äquatorialzonen 18 kommt die Einlage 20 der Innenwand 14 des Elastomerköpers 10 so nahe, daß sie nur gerade hinreichend von Elastomer bedeckt ist, um geschützt zu sein, oder freiliegt, wenn sie aus gegen Umgebungseinflüsse unempfindlichem Material besteht.

Der Elastomerkörper 10 und die Einlage 20 bilden gemeinsam zwischen jedem der beiden Aufhängepole 16 und jeder der Äquatorialzonen 18 einen Biegebalken 22. Jeder dieser insgesamt vier Biegebalken 22 verjüngt sich von dem Aufhängepol 16, von dem er ausgeht, zur Äquatorialebene 18, an der er endet, und die Einlage 20 ist in jedem dieser Biegebalken so angeordnet, daß sie eine bezüglich Biegung neutrale Faser bildet.

Bei der in Fig. 1 bis 3A dargestellten Aufhängeöse ist zwischen je zwei von einem gemeinsamen Aufhängepol 16 ausgehenden, divergierenden Biegebalken 22 ein Puffer 24 angeordnet, der sich bis in die Nähe der X-Y-Ebene erstreckt. Wenn die Aufhängeöse auf Zug belastet wird, die beiden Aufhängepole 16 also voneinander weggezogen werden, treten in den vier Biegebalken 22 Biegemomente auf, die aber wegen der beschriebenen Anordnung der Einlage 20 nirgends zu nennenswerten Zugspannungen im Elastomerkörper 10 führen. Wenn die beiden Aufhängepole 16 jedoch, z.B. bei Schwingungen einer über die Aufhängeöse an der Karosserie eines Kraftfahrzeugs aufgehängten Auspuffanlage, über ein geringfügiges Maß hinaus zueinander hin bewegt werden, stoßen die beiden Puffer 24 gegeneinander und verhindern so eine Verformung der Aufhängeöse, bei der im Elastomekörper 10 in den beiden Äquatorialzonen 18 außerhalb der Einlage 20 nennenswerte Zugspannungen auftreten würden.

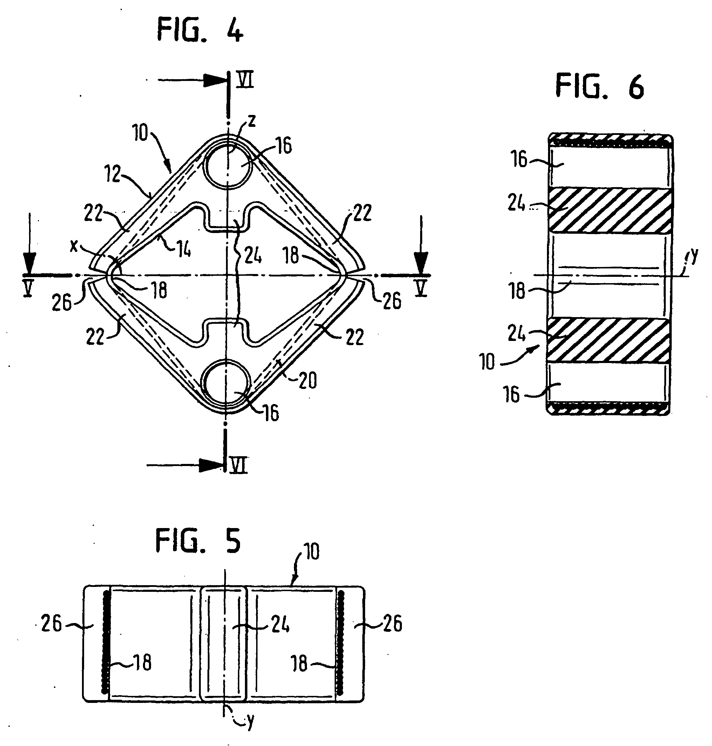

Die Aufhängeöse gemäß Fig. 4 bis 6 unterscheidet sich von der in Fig. 1 bis 3A dargestellten dadurch, daß die beiden Puffer 24 kürzer sind, also in unbelastetem Zustand der Aufhängeöse in einem größeren Abstand von der X-Y-Ebene enden. In Folge dessen läßt sich die Aufhängeöse gemäß Fig. 4 bis 6 stärker zusammendrücken als die in Fig. 1 bis 3A dargestellte. Um dennoch zu vermeiden, daß im Elastomerkörper 10 in den Äquatorialzonen 18 außerhalb der Einlage 20 beim Flachdrücken der Aufhängeöse Zugspannungen auftreten, weist der Elastomerkörper in den Äquatorialzonen 18 je eine Kerbe 26 auf, die sich außen bis annähernd zur Einlage 20 oder, wenn diese gegen Umgebungseinflüsse unempfindlich ist, bis ganz zur Einlage 20 hin erstreckt.

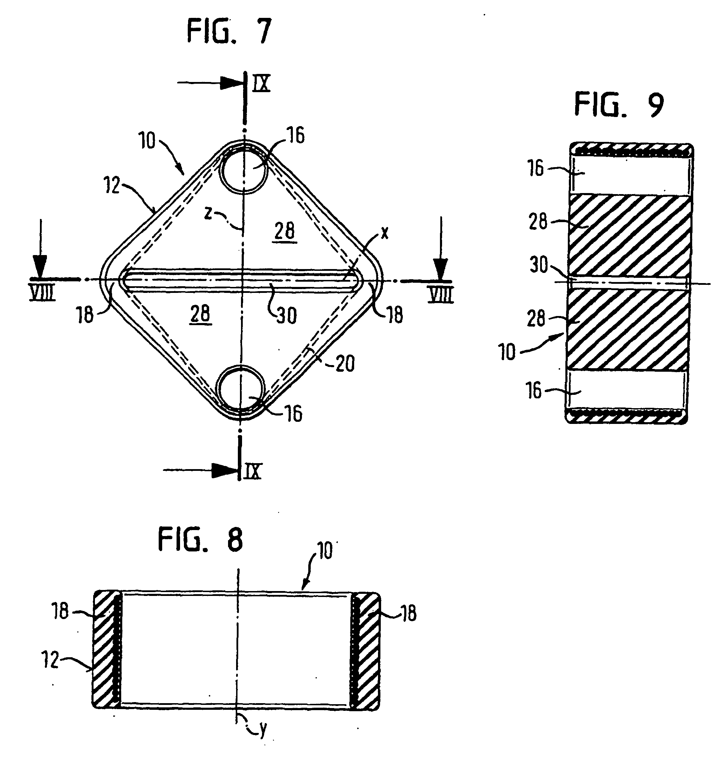

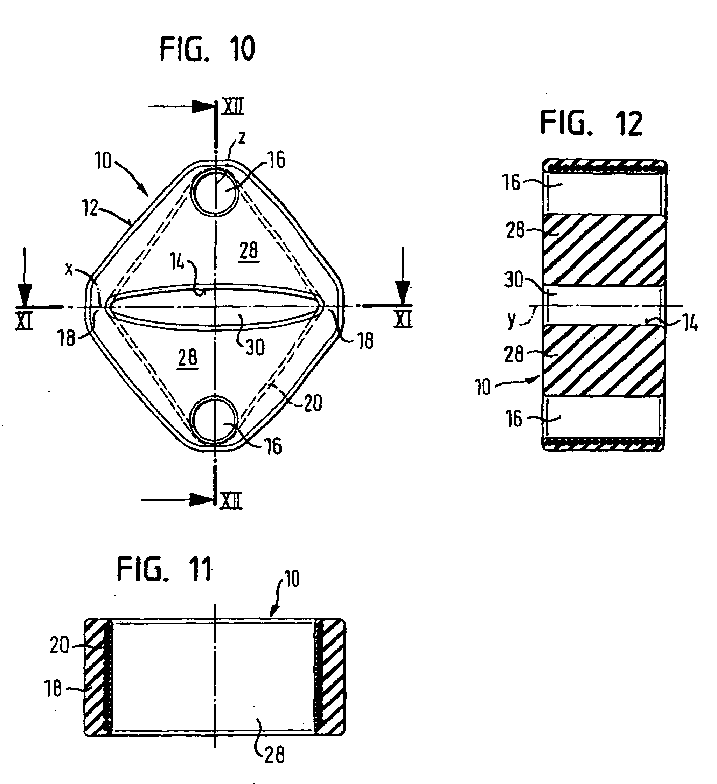

Bei der Aufhängeöse, die in Fig. 7 bis 9 unbelastet und in Fig. 10 bis 12 auf Zug belastet dargestellt ist, sind die Biegebalken 22 und Puffer 24 durch ein Paar Druckpolster 28 ersetzt, die zwischen sich nur einen äquatorialen Schlitz 30 freilassen. Dieser Schlitz 30 reicht von einer Äquatorialzone 18 zur anderen, so daß die Einlage 20 dort jeweils zumindest annähernd freigelegt ist und der Elastomerkörper 10 in den beiden Äquatorialzonen 18 wie in Fig. 1 eine nennenswerte Dicke nur außerhalb der Einlage 20 aufweist. In unbelastetem Zustand ist der äquatoriale Schlitz 30 gemäß Fig. 7 und 9 auf seiner gesamten Länge ungefähr gleich eng; wenn die Aufhängeöse auf Zug belastet wird, weitet sich der Schlitz 30 gemäß Fig. 10 und 12. Dabei werden die beiden Druckpolster 28 im wesentlichen auf Druck und zusätzlich auf Schub beansprucht; nennenswerte Zugbeanspruchungen treten wiederum nicht auf. Wenn die Aufhängeöse hingegen mit einer Druckkraft belastet wird, die bestrebt ist, die beiden Aufhängepole 16 einander zu nähern, so schließt sich der äquatoriale Schlitz 30; die beiden Druckpolster 28 verhindern somit, daß in den Äquatorialzonen 18 außerhalb der Einlage 20 nennenswerte Zugspannungen auftreten.

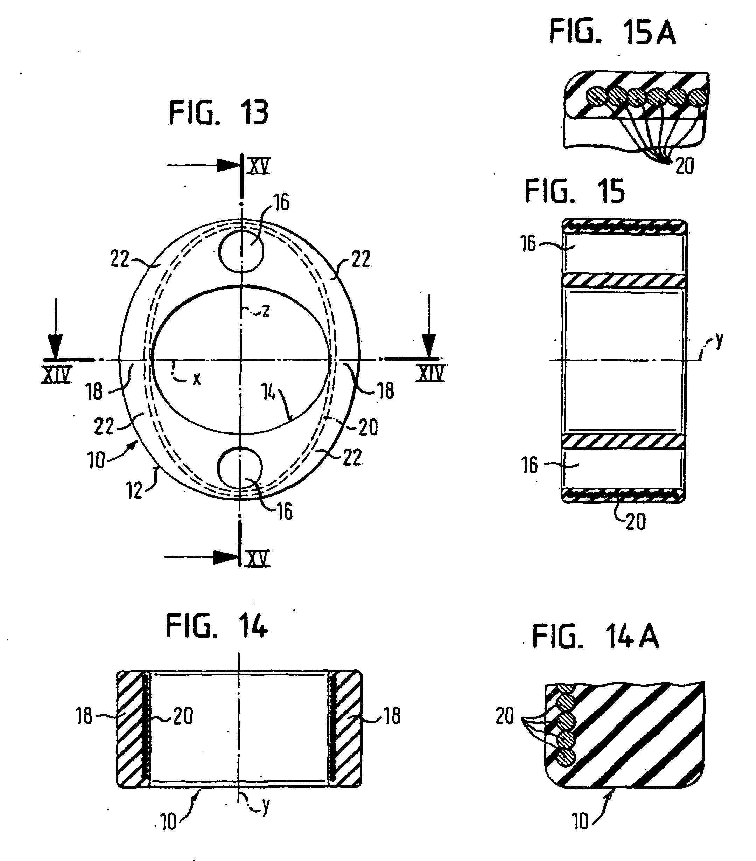

Der Elastomerkörper 10 kann einen Umriß haben, der von der in Fig. 1 bis 12 dargestellten Rhombusform abweicht. Beispielsweise kann der Elastomerkörper 10 kreisförmig oder elliptisch sein. Bei dem in Fig. 13 bis 15A dargestellten Ausführungsbeispiel hat die Außenwand 12 des Elastomerkörpers 10 in Seitenansicht gemäß Fig. 13 die Form einer stehenden Ellipse, während die Innenwand 14 die Form einer liegenden Ellipse hat; die Hauptachsen dieser beiden Ellipsen schneiden sich rechtwinklig. Die Einlage 20 hat einen den bisher beschriebenen Ausführungsbeispielen entsprechenden Verlauf; sie liegt also im Bereich der Aufhängepole 16 an oder in geringem Abstand von der Außenwand 12 und in den beiden Äquatorialzonen 18 an oder in geringem Abstand von der Innenwand 14. Wie bei den in Fig. 1 bis 6 dargestellten Ausführungsbeispielen bildet die Aufhängeöse gemäß Fig. 13 bis 15A vier Biegebalken 22, und bei jedem von diesen liegt die Einlage 20 in der bezüglich Biegebelastungen neutralen Zone.

## Patentansprüche

1. Aufhängeöse für eine schwingende Last, insbes. für eine Abgasanlage eines Kraftfahrzeugs,
- mit einem ringförmigen Elastomerkörper (10), der von einer Außenwand (12) und einer Innenwand (14) begrenzt ist und zwei einander diametral gegenüberliegende Aufhängepole (16) sowie zwei Äquatorialzonen (18) aufweist,
- in einer Anordnung, bei der die Aufhängepole (16) sich bei Zugbelastung der Aufhängeöse voneinander entfernen, während die Äquatorialzonen (18) sich einander nähern,
- und mit einer biegsamen Einlage (20), die in den Elastomerkörper (10) so eingebettet ist, daß sie bei Zugbelastung der Aufhängeöse Zugkräfte über die Äquatorialzonen (18) von einem Aufhängepol (16) zum anderen überträgt,
**dadurch gekennzeichnet, daß** die Einlage (20) einen auf dem Weg von den Aufhängepolen (16) zu den Äquatorialzonen (18) stetig abnehmenden Abstand von der Innenwand (14) des Elastomerkörpers (10) hat.

2. Aufhängeöse nach Anspruch 1,
**dadurch gekennzeichnet, daß** die Einlage (20) in den Äquatorialzonen (18) unmittelbar an die Innenwand (14) des Elastomerkörpers (10) angrenzt.

3. Aufhängeöse nach Anspruch 1 oder 2,
**dadurch gekennzeichnet, daß** die Einlage (20) einen auf dem Weg von den Aufhängepölen (16) mindestens bis in die Nähe der Äquatorialzonen (18) zunehmenden Abstand von der Außenwand (12) des Elastomerkörpers (10) hat.

4. Aufhängeöse nach einem der Ansprüche 1 bis 3,
**dadurch gekennzeichnet, daß** der Elastomerkörper (10) zwei einander entgegengerichtete Paar Biegebalken (22) aufweist, die von je einem der Aufhängepole (16) ausgehen und mit zunehmendem Abstand von diesem schlanker werden.

5. Aufhängeöse nach Anspruch 4,
**dadurch gekennzeichnet, daß** die Biegebalken (22) in den Äquatorialzonen (18) im wesentlichen nur durch die Einlage (20) miteinander verbunden sind.

6. Aufhängeöse nach Anspruch 4 oder 5,
**dadurch gekennzeichnet, daß** zwischen den Biegebalken (22) jedes Paars ein Puffer (24) angeordnet ist, der gemeinsam mit dem zwischen den Biegebalken (22) des anderen Paars angeordneten Puffer (24) eine gegenseitige Annäherung der Aufhängepole (16) begrenzt.

7. Aufhängeöse nach einem der Ansprüche 4 bis 6,
**dadurch gekennzeichnet, daß** die Einlage (20) in einer bei Zugbelastung der Aufhängeöse neutralen Faser jedes Biegebalkens (22) liegt.

8. Aufhängeöse nach einem der Ansprüche 1 bis 3,
**dadurch gekennzeichnet, daß** der Elastomerkörper (10) zwei einander gegenüberliegende dreieckige Druckpolster (28) aufweist, die je einen Aufhängepol (16) als Scheitel aufweisen, gemeinsam von der Einlage (20) umschlungen und durch einen äquatorialen Schlitz (30) voneinander getrennt sind.

9. Aufhängeöse nach Anspruch 8,
**dadurch gekennzeichnet, daß** der Elastomerkörper (10) zwei Hälften aufweist, die je eines der Druckpolster (28) enthalten und im wesentlichen nur durch die Einlage (20) miteinander verbunden sind.

10. Aufhängeöse nach einem der Ansprüche 1 bis 9,
**dadurch gekennzeichnete daß** die Einlage (20) mindestens einen
Faden aufweist, der sich von einem der Aufhängepole (16) zum anderen diagonal über die Breite des Elastomerkörpers (10) erstreckt.

## Claims

1. A suspension lug for a swinging load, especially for an exhaust system of a motor vehicle,
- comprising a ring-shaped elastomer body (10) which is delimited by an outer wall (12) and an inner wall (14) and comprises two diametrically opposed suspension poles (16) and two equatorial zones (18)
- in an arrangement such that the suspension poles (16) move away from each other, while the equatorial zones (18) approach each other, when the suspension lug is subjected to tensile loading,
- and further comprising a flexible insert (20) which is embedded in the elastomer body (10) in such a way that it transmits tensile forces from one suspension pole (16) to the other through the equatorial zones (18) when the suspension lug is subjected to tensile loading,
**characterized in that** the distance of the insert (20) from the inner wall (14) of the elastomer body (10) decreases steadily on the way from the suspension poles (16) to the equatorial zones (18).

2. The suspension lug as claimed in claim 1,
**characterized in that** the insert (20) borders directly on the inner wall (14) of the elastomer body (10) in the equatorial zones (18).

3. The suspension lug as claimed in claim 1 or 2,
**characterized in that** the distance of the insert (20) from the outer wall (12) of the elastomer body (10) increases on the way from the suspension poles (16) at least up to close to the equatorial zones (18).

4. The suspension lug as claimed in one of claims 1 to 3,
**characterized in that** the elastomer body (10) comprises two oppositely oriented pairs of transverse beams (22), starting from one each of the suspension poles (16) and becoming narrower as the distance from the same becomes greater.

5. The suspension lug as claimed in claim 4,
**characterized in that** the transverse beams (22) essentially are interconnected only by the insert (20) in the equatorial zones (18).

6. The suspension lug as claimed in claim 4 or 5,
**characterized in that** a buffer (24) each is disposed between the transverse beams (22) of each pair and, together with the buffer (24) between the other pair of transverse beams (22), it limits mutual approaching of the suspension poles (16).

7. The suspension lug as claimed in one of claims 4 to 6,
**characterized in that** the insert (20) is located to lie in a neutral axis of each transverse beam (22) when the suspension lug is subjected to tensile loading.

8. The suspension lug as claimed in one of claims 1 to 3,
**characterized in that** the elastomer body (10) comprises two opposed triangular pressure pads (28), each comprising a suspension pole (16) as their apex, both being embraced by the insert (20) and separated from each other by an equatorial slot (30).

9. The suspension lug as claimed in claim 8,
**characterized in that** the elastomer body (10) comprises two halves which include one each of the pressure pads (28) and essentially are interconnected only by the insert (20).

10. The suspension lug as claimed in one of claims 1 to 9,
**characterized in that** the insert (20) comprises at least one thread extending from one of the suspension poles (16) to the other diagonally over the width of the elastomer body (10).

## Revendications

1. Boucle de suspension pour charge oscillante, en particulier pour le système d'échappement d'un véhicule automobile ;
- comprenant un corps en élastomère (10) annulaire qui est délimité par une paroi extérieure (12) et par une paroi intérieure (14) et qui présente deux pôles de suspension (16) diamétralement opposés ainsi que deux zones équatoriales (18),
- selon une disposition dans le cadre de laquelle, lorsque la boucle de suspension est sous contrainte par. traction, les pôles de suspension (16) s'éloignent l'un de l'autre tandis que les zones équatoriales (18) se rapprochent l'une de l'autre,
- et comprenant un élément rapporté (20) souple qui est logé de telle sorte dans le corps en élastomère (10) que, lorsque la boucle de suspension est sous contrainte par traction, il transmet d'un pôle de suspension (16) à l'autre les forces de traction via les zones équatoriales (18),
**caractérisée en ce que** l'élément rapporté (20) accuse par rapport à la paroi intérieure (14) du corps en élastomère (10) un écartement qui va en décroissant des pôles de suspension (16) aux zones équatoriales (18).

2. Boucle de suspension selon la revendication 1,
**caractérisée en ce que** l'élément rapporté (20) est, dans les zones équatoriales (18), directement contigu à la paroi intérieure (14) du corps en élastomère (10).

3. Boucle de suspension selon la revendication 1 ou 2,
**caractérisée en ce que** l'élément rapporté (20) accuse par rapport à la paroi extérieure (12) du corps en élastomère (10) un écartement qui va en croissant des pôles de suspension (16) jusque, pour le moins, à la proximité des zones équatoriales (18).

4. Boucle de suspension selon l'une des revendications 1 à 3,
**caractérisée en ce que** le corps en élastomère (10) présente deux paires de barres de flexion (22) se faisant face, lesquelles barres partent chacune de l'un des pôles de suspension (16) et s'amincissent à mesure qu'elles s'éloignent desdits pôles.

5. Boucle de suspension selon la revendication 4,
**caractérisée en ce que** les barres de flexion (22) sont, dans les zones équatoriales (18), reliées entre elles pour l'essentiel uniquement par l'élément rapporté (20).

6. Boucle de suspension selon la revendication 4 ou 5,
**caractérisée en ce qu'**un butoir (24) est disposé entre les barres de flexion (22) de chaque paire, lequel butoir, conjointement avec le butoir (24) disposé entre les barres de flexion (22) de l'autre paire, limite le rapprochement réciproque des pôles de suspension (16).

7. Boucle de suspension selon l'une des revendications 4 à 6,
**caractérisée en ce que** l'élément rapporté (20) repose dans un axe neutre de chaque barre de flexion (22) lorsque la boucle de suspension est sous contrainte par traction.

8. Boucle de suspension selon l'une des revendications 1 à 3,
**caractérisée en ce que** le corps en élastomère (10) présente deux garnitures de butée (28) triangulaires diamétralement opposées, lesquelles présentent chacune un pôle de suspension (16) comme point culminant et sont toutes les deux entourées par l'élément rapporté (20) et séparées l'une de l'autre par une fente équatoriale (30).

9. Boucle de suspension selon la revendication 8,
**caractérisée en ce que** le corps en élastomère (10) présente deux moitiés qui comprennent chacune l'une des garnitures de butée (28) et sont reliées entre elles pour l'essentiel uniquement par l'élément rapporté (20).

10. Boucle de suspension selon l'une des revendications 1 à 9,
**caractérisée en ce que** l'élément rapporté (20) présente au moins un fil qui, d'un pôle de suspension (16) à l'autre, s'étend diagonalement sur la largeur du corps en élastomère (10).
